# NEUE EUROPÄISCHE PATENTSCHRIFT

(11) **EP 0 816 299 B2**
(45) Veröffentlichungstag und Bekanntmachung des Hinweises auf die Entscheidung über den Einspruch: **18.10.2006**
(45) Hinweis auf die Patenterteilung: 27.08.2003
(21) Anmeldenummer: 97890100.7
(22) Anmeldetag: 10.06.1997
(51) Int. Cl.: C04B 24/38, C08L 3/12

(54) **Baustoffzusatzmittel auf Basis vom Amylopektin**
Additive for building materials on the basis of amylopectin
Additif pour des matériaux de construction contenant amylopectine

(30) Priorität: 28.06.1996 AT 115196
(43) Veröffentlichungstag der Anmeldung: 07.01.1998
(73) Patentinhaber: Südzucker Aktiengesellschaft Mannheim/Ochsenfurt, 68165 Mannheim (DE)
(72) Erfinder: Grüll, Dietmar, Dipl.Ing.Dr., 3442 Langenschönbichl (AT); Kubadinow, Nikolai, Dr., 1130 Wien (AT); Steindl, Roman, Dipl.Ing., 3910 Stift Zwettl (AT)
(74) Vertreter: Pawloy, Peter Michael

(56) Entgegenhaltungen:
- EP-A- 0 703 314
- EP-A- 0 769 501
- WO-A-92/11376
- WO-A-92/18325
- WO-A-94/12328
- WO-A-95/15849
- CA-A- 2 061 443
- US-A- 2 974 048
- US-A- 4 287 103
- US-A- 4 654 085
- US-A- 5 366 550
- Schoch, J. Am. Chem. Soc., 64(1942), 2957
- Shewmaker et al., Plant Physiol., 100(1992), 1083-1086
- Heyer, Kartoffelbau, 43(12), 1992, 500-503

## Beschreibung

Die gegenständliche Erfindung betrifft eine Zusammensetzung umfassend hydraulische bzw. organisch-polymere Bindemittel sowie Gemische derselben, die native oder derivatisierte Kartoffelstärke enthält.

In der Bauindustrie werden Stärke und Stärkederivate verschiedenster Rohstoffbasis als Zusatzmittel sowohl zu hydraulischen als auch zu organisch-polymeren Bindemitteln in wässerigen Systemen eingesetzt. Die Stärke bzw. die Stärkederivate haben einen starken Einfluss auf die Rheologie der wässerigen Systeme. Insbesondere wirken sie als effiziente Verdicker, Mittel zur Verbesserung der Wasserretention sowie als Verarbeitungshilfsmittel.

Die Systeme, bei denen Stärke und Stärkederivate zum Einsatz kommen, reichen von den verschiedensten Mörteln und Betonmassen, welche zur Herstellung von Baukörpern dienen, bis zu Putzmassen, Klebern und Farben, die oberflächlich aufgebracht werden.

Unter hydraulischen Bindemitteln versteht man die anorganischen Bindemittel auf Zement-, Kalk- und Gipsbasis. In letzter Zeit kommen diese häufig in Mischung mit organisch-polymeren Bindemitteln zum Einsatz. Diese organisch-polymeren Bindemittel liegen für den praktischen Einsatz in Form von wässerigen Emulsionen bzw. Dispersionen vor. In gewissen Fällen können sie auch als alleinige Bindemittel verwendet werden.

Stärke ist ein pflanzliches Naturprodukt. Sie besteht im Wesentlichen aus einem Glucosepolymer, das eine geringe Menge Phosphorsäure in Esterbindung enthält. Je nach Ausgangspflanze stellt die Stärke eine mengenmäßig unterschiedliche Zusammensetzung zweier Bestandteile dar, nämlich von Amylose und Amylopektin. Amylose und Amylopektin sind ihrerseits wieder keine einheitlichen Substanzen, sondern sind Gemische von Polymeren mit unterschiedlichen Molekulargewichten. Amylose besteht im Wesentlichen aus unverzweigten Polysacchariden, in denen die Glucose in 1,4-Bindung vorliegt. In den natürlichen Stärkekörnern liegt die Amylose in der Regel im Inneren des Korns vor. Um diesen Kern aus Amylose ist das Amylopektin angeordnet. Dieses ist ein stark verzweigtes Glucosepolymer, bei welchem die Glucoseeinheiten an den Verzweigungsstellen in 1,6-Bindung enthalten sind.

Natürliche Stärken haben in der Regel einen Amylosegehalt von 15 % bis 25 %, unabhängig von der Pflanzenart, aus der sie gewonnen werden. Nur eine einzige bekannte Maissorte liefert; eine Stärke, die praktisch ausschließlich aus Amylopektin besteht. Das Anwendungsgebiet dieser Stärke, der sogenannten Wachsmaisstärke, liegt praktisch ausschließlich im Lebensmittelbereich. Hier wird als besondere Eigenschaft die Tatsache geschätzt, dass diese amylosefreie Stärke bei der Verkleisterung in weit geringerem Maße Fäden zieht als eine amylosereiche Stärke. Dadurch wird bei den mit Wachsmaisstärke hergestellten Lebensmitteln ein verbessertes Mundgefühl im Verhältnis zu Produkten mit üblicher Stärke erzielt. Im technischen Bereich hat sich die Wachsmaisstärke durch ihren relativ hohen Preis bisher schwer durchgesetzt.

Es sind Verfahren bekannt, um auf chemischem Weg den Amylosegehalt von Stärke herabzusetzen. Der Aufwand hiefür ist jedoch beträchtlich und kann nur betrieben werden, wenn wirtschaftliche Gesichtspunkte es erlauben.

Um die chemischen Methoden derTrennung von Amylose und Amylopektin zu umgehen, bestanden in letzter Zeit intensive Bestrebungen, die Kartöffelpflanze so zu modifizieren, dass die von diesen Pflanzen produzierte Stärke einen höheren Amylopektingehalt im Verhältnis zu üblicher Kartoffelstärke hat. Tatsächlich ist es gelungen, durch antisense-Inhibition eines GBSS-Gens (GBSS - granule bound starch synthase) eine solche Veränderung;in dem Genom der Kartoffel zu erzielen, dass die gebildete Stärke praktisch keine Amylose mehr enthält. Dieses Verfahren der gentechnischen Veränderung der Kartoffel ist erstmals in der WO 92/11376 (Amylogene) beschrieben. Die erhaltene Stärke besteht praktisch zur Gänze aus Amylopektin. Eine Stärke mit einem im Verhältnis zu gewöhnlicher Stärke verminderten Amylosegehalt wird als Amylopektin-Stärke bezeichnet. Die Derivatisierung einer solchen Stärke erfolgt nach prinzipiell bekannten Methoden.

Neben der genannten antisense-Inhibition sind noch andere molekularbiologische Methoden zur Veränderung der Kartoffelpflanze im Hinblick auf die Produktion einer Amylose-reduzierenden Stärke möglich.

In der EP-A1 0 703 314 (AVEBE) wird die Verwendung von Amylopektin-Kartoffelstärke in kationischer Form als Massestärke bei der Papierherstellung vorgeschlagen. Die Amylopektin-Stärke wird dabei bevorzugt aus gentechnisch veränderten Kartoffeln gewonnen. Außer auf diesem Gebiet der Papierherstellung ist im Non-Food-Bereich keine Verwendung der Amylopektin-Stärke auf Basis Gentransformation bekannt.

Amylopektin als Zusatzkomponente in hydraulisch abbindenden Zusammensetzungen wird in der WO95/15849 A genannt.

Stärkeester und -ether werden nach der US 5 366 550 in Zementzusammensetzungen genannt.

Hydroxypropyliertes Amylopektin wird als Bestandteil eines Fugenmaterials in der US 4 287 103 beschrieben.

Als Stärkederivate sind in der Bauindustrie Stärkeether und Stärkeester in Verwendung. Die Art der Derivatisierung und die Rohstoffbasis der verwendeten Stärke (Kartoffel, Mais) hängt sehr eng mit dem speziellen Einsatzbereich des jeweiligen Produktes zusammen.

Als besonderes Anwendungsgebiet für Kartoffelstärke hat sich der Bereich der Spritzputze entwickelt, bei denen die Rheologie der Spritzmassen von großer Bedeutung ist. Kartoffelstärke und ihre Derivate eignen sich besonders gut, um die Verarbeitbarkeit von Spritzputzen zu beeinflussen.

Die Rheologie der Putzmassen steht in engem Zusammenhang mit der Scherempfindlichkeit der eingesetzten Stärkeprodukte unter den fachmännisch hinlänglich bekannten Verarbeitungsbedingungen. Die Stärke wird daher in der Regel zur Erhöhung der Scherstabilität modifiziert, insbesondere wird sie meistens vernetzt, um bei den auftretenden Scherbedingungen widerstandsfähiger zu sein. Die Methoden hiezu sind bekannt.

Stärkederivate für die Baustoffindustrie werden üblicherweise so eingestellt, dass sie kaltwasserlöslich sind. Auch hier sind die hiezu verwendeten Verfahren bekannt. Es sind dies u.a. Verkleisterung und Walzentrocknung im dünnen Film. Bei der Walzentrocknung wird durch den Einfluss von Temperatur und Scherkräften ent weder die granuläre Stärke selbst aufgeschlossen oder ein bereits aufgeschlossener Kleister getrocknet. In beiden Fällen verursacht die Walzentrocknung eine Auflösung der nativen Stärkestrukturen. Zur optimalen Entfaltung der Eigenschaften der Stärkederivate für den Baubereich ist der richtige Aufschlussgrad von großer Bedeutung.

Im Zuge der Forschungen auf diesem Gebiet zeigte es sich nun, dass überraschenderweise die Amylopektin-Stärkekörner der Kartoffelstärke im Vergleich zu den Amylose-Stärkekörnern von höherer Stabilität sind, als dies erwartet werden konnte. Die physikalischen Eigenschaften des Amylopektins, wie z.B. Klarheit und Viskosität des daraus hergestellten Kleisters, sind außerordentlich günstig und zeigen ebenfalls eine unerwartet hohe Stabilität. Bei Lagerung bei Raumtemperatur nimmt die Viskosität eines Amylopektin-Stärkekleisters nach 7 Tagen nur um maximal 10 % zu.

Die vorliegende Erfindung betrifft einen neuen Anwendungsbereich für Amylopektin-Kartoffelstärke, in welchem die günstigen Eigenschaften dieser Stärke zu besonderen Produktvorteilen führen.

Erfindungsgemäß ist die eingangs genannte Zusammensetzung dadurch gekennzeichnet, dass die Kartoffelstärke einen Amylosegehalt von weniger als 20 % aufweist und die Kartoffelstärke eine solche ist, die aus durch molekularbiologische Methoden veränderten Kartoffeln gewonnen wurde. Insbesondere weist die Kartoffelstärke einen Amylosegehalt von 0 % bis 8 %, vorzugsweise von 0 % bis 5 %, auf.

Eine Zusammensetzung mit einem Gehalt an einer aus gentechnisch veränderten Kartoffeln gewonnenen Stärke bzw. Derivaten derselben ist eine besonders vorteilhafte Ausführungsform der vorliegenden Erfindung. Doch kann jede Form der Amylopektin-Stärke, die durch andere Pflanzenveränderungen zur Unterdrückung der Amylosebildung gewonnen wird, ebenso eingesetzt werden.

Die Stärke wird in Zusammensetzungen bevorzugt in derivatisierter Form eingesetzt. Bei der Derivatisierung der Stärke bewirkt die genannte höhere Kornstabilität des Amylopektins eine Vereinfachung der Herstellungstechnologie. Das Amylopektin ist weniger alkali- und weniger temperaturempfindlich als die Amylose. Die herkömmlichen Derivatisierungsreaktionen, wie z.B. Veretherungs- und Veresterungsreaktionen, die bevorzugt zur Derivatisierung der Stärke eingesetzt werden, können dadurch bei kürzeren Reaktionszeiten intensiviert und der Einsatz von Verkleisterungsschutzsalzen kann deutlich herabgesetzt werden. Die Einsparung an Reaktionszeit und die deutliche Reduktion der Einsatzchemikalien äußert sich nicht nur wirtschaftlich in verminderten Herstellungskosten, sondern auch in ökologischer Hinsicht. Einerseits sind die Salzfrachten und die CSB-Belastung der Reaktionsabwässer merklich geringer, andererseits kann auf den Einsatz von ökologisch bedenklichen Vernetzungsreagentien, wie z.B. Epichlorhydrin, völlig verzichtet werden.

Vorzugsweise liegt die Stärke als Methyl-, Ethyl-, Hydroxyethyl-, Hydroxypropyl-, Hydroxybutyl-, Carboxymethyl-, Cyanoethyl-, Carbamoylether oder als Gemisch hievon vor.

Die höhere Stabilität der Amylopektin-Kartoffelstärkekörner bringt in den Substanzeigenschaften der herstellbaren Produkte viele Vorteile, wie z.B. höhere Viskosität und erhöhte spezifische Verdickungswirkung. Dadurch kann die Einsatzmenge als Verdicker in den mit der neuen Zusammensetzung hergestellten Bau stoffmassen, wie z.B. in Maschinenputzen oder Fliesenklebern, gegenüber herkömmlichen Verdickern auf der Basis üblicher Kartoffelstärke deutlich reduziert werden. Diese Verminderung kann Aus maße bis über die Hälfte der bisher eingesetzten Mengen erbringen. Eine solche Herabsetzung der Einsatzmenge um z.B. 50 % bedeutet aber einen Qualitätsvorsprung der Produkte, der zur Zeit von keinem anderen Verdickersystem erreicht werden kann. Daher ist es ein besonders vorteilhaftes Merkmal der vorliegenden Erfindung, dass die neuen Zusammensetzungen eine bis zu etwa 50 % verringerte Einsatzmenge der Amylopektin-Stärke im Verhältnis zu üblicher Kartoffelstärke aufweisen.

Es ist günstig, wenn die Stärke in der neuen Zusammensetzung in kaltquellender oder kaltlöslicher Form vorliegt.

Die höhere Scherstabilität der mit den neuen Zusammensetzungen hergestellten Baustoffmassen bewirkt hervorragende anwendungstechnische Eigenschaften. Dazu zählen die leichtgängige Verarbeitbarkeit, das sehr hohe Standvermögen, die Ergiebigkeit und das Fließverhalten.

Somit wird gegebenenfalls derivatisierte Amylopektin-Kartoffelstärke, welche aus durch molekularbiolgische Methoden veränderten Kartoffeln gewonnen wurde, als Verdickungsmittel, Wasserretentionsverbesserungsmittel bzw. Verarbeitungshilfsmittel zusammen mit hydraulischen bzw. organisch-polymeren Bindemitteln bzw. Gemischen derselben eingesetzt.

Zusätzlich zur Amylopektin-Kartoffelstärke können auch native oder derivatisierte Stärken aus anderen pflanzlichen Quellen, Cellulose und/oder Cellulosederivate und/oder andere Hydrokolloide oder deren Derivate in der neuen Zusammensetzung enthalten sein.

Die erfindungsgemäße Zusammensetzung erlaubt dem Verarbeiter eine einfachere Handhabung. Für den Sektor der Fertigputze können z.B. auch Füllstoffe, Farbstoffe und andere bekannte Zusätze in gewünschtem Verhältnis beigefügt werden, sodass sich Putze mit gleichbleibender und reproduzierbarer Qualität ergeben und die Verarbeitung problemlos und möglichst einfach wird.

Die beiden folgenden Beispiele demonstrieren in deutlicher Weise die mit der erfindungsgemäßen Zusammensetzung erzielbaren Verbesserungen.

### Beispiel 1 :

| | |
|---|---|
| Stärkeether: | 2-Hydroxypropylstärke |
| Basis: | Standardkartoffelstärke |
| Substitutionsgrad: | 0,5 |
| Viskosität: | 375 mPa.s. Brookfield RVT, |
| | 20°C, 100 UpM, 5 %ige Lösung |
| Verdickungswirkung | a) Kalk/Gips-Putz, Wf=0,32 |

| | |
|---|---|
| | 0,04 % Einsatzmenge |
| | 16,5 cm Ausbreitmaß |
| Verdickungswirkung | b) Gips/Kalk-Reibputz, Wf=0,40 |
| | 0,07 % Einsatzmenge |
| | 17,0 cm Ausbreitmaß |

### Beispiel 2 :

| | |
|---|---|
| Stärkeether: | 2-Hydroxypropylstärke |
| Basis: | Amylopektin-Kartoffelstärke |
| Substitutionsgrad: | 0,5 |
| Viskosität: | 3440 mPa.s. Brookfield RVT, |
| | 20°C, 100 UpM, 5 %ige Lösung |
| Verdickungswirkung | a) Kalk/Gips-Putz, Wf=0,32 |
| | 0,02 % Einsatzmenge |
| | 15,3 cm Ausbreitmaß |
| Verdickungswirkung | b) Gips/Kalk-Reibputz, Wf=0,40 |
| | 0,04 % Einsatzmenge |
| | 16,8 cm Ausbreitmaß |

Aus diesen Beispielen ist ersichtlich, dass bei Verwendung von Amylopektin-Kartoffelstärke mit halber Einsatzmenge das gleiche Ausbreitungsmaß erreicht werden kann.

## Patentansprüche

1. Zusammensetzung umfassend hydraulische bzw. organisch-polymere Bindemittel bzw. Gemische derselben in wässerigen Systemen und native oder derivatisierte Kartoffelstärke mit einem Amylosegehalt von weniger als 20%, **dadurch gekennzeichnet, dass** die Kartoffelstärke eine solche ist, die aus durch molekularbiologische Methoden veränderten Kartoffeln gewonnen wurde.

2. Zusammensetzung nach Anspruch 1, **dadurch gekennzeichnet, dass** die Kartoffelstärke einen Amylosegehalt von 0 % bis 8 % aufweist.

3. Zusammensetzung nach Anspruch 1 oder 2, **dadurch gekennzeichnet, dass** die Kartoffelstärke einen Amylosegehalt von 0 % bis 5 % aufweist.

4. Zusammensetzung nach Anspruch 3, **dadurch gekennzeichnet, dass** die Kartoffelstärke eine solche ist, die aus durch antisense-Inhibition eines GBSS-Gens gentechnisch veränderten Kartoffeln gewonnen wurde.

5. Zusammensetzung nach einem der Ansprüche 1 bis 4, **dadurch gekennzeichnet, dass** die Kartoffelstärke in kaltquellender oder kaltlöslicher Form vorliegt.

6. Zusammensetzung nach einem der Ansprüche 1 bis 5, **dadurch gekennzeichnet, dass** die Kartoffelstärke in derivatisierter Form vorliegt.

7. Zusammensetzung nach Anspruch 6, **dadurch gekennzeichnet, dass** die Kartoffelstärke Ester- und/oder Ethergruppen trägt.

8. Zusammensetzung nach Anspruch 7, **dadurch gekennzeichnet, dass** die Kartoffelstärke als Methyl-, Ethyl-, Hydroxyethyl-, Hydroxypropyl-, Hydroxybutyl-, Carboxymethyl-, Cyanoethyl-, Carbamoylether oder als Gemisch hievon vorliegt.

9. Zusammensetzung nach einem der Ansprüche 1 bis 8, **dadurch gekennzeichnet, dass** sie zusätzlich zur Amylopektin-Kartoffelstärke native oder derivatisierte Stärken aus anderen pflanzlichen Quellen, Cellulose und/oder Cellulosederivate und/oder andere Hydrokolloide oder deren Derivate enthält.

10. Zusammensetzung nach einem der Ansprüche 1 bis 9, **dadurch gekennzeichnet, dass** sie weiters an sich bekannte Füllstoffe, Farbstoffe und andere in solchen Massen übliche Zusätze umfasst.

11. Verwendung einer Zusammensetzung nach einem der Ansprüche 1 bis 10 als Fertigputzmasse.

12. Verwendung von gegebenenfalls derivatisierter Amylopektin-Kartoffelstärke, welche aus durch molekularbiologische Methoden veränderten Kartoffeln gewonnen wurde, als Verdickungsmittel, Wasserretentionsverbesserungsmittel bzw. Verarbeitungshilfsmittel zusammen mit hydraulischen bzw. organisch-polymeren Binde mitteln bzw. Gemischen derselben.

## Claims

1. A composition comprising hydraulic and/or organopolymer binders and/or mixtures thereof in aqueous systems and native or derivatized potato starch having an amylose content of less than 20%, **characterized in that** the potato starch is such obtained from potatoes modified by molecular biologic methods.

2. A composition according to claim 1, **characterized in that** the potato starch has an amylose content of from 0% to 8%.

3. A composition according to claim 1 or 2, **characterized in that** the potato starch has an amylose content of from 0% to 5%.

4. A composition according to claim 3, **characterized in that** the potato starch is such obtained from potatoes genetically modified by the antisense inhibition of a GBSS gene.

5. A composition according to any one of claims 1 to 4, **characterized in that** the potato starch is present in a cold-swellable or cold-soluble form.

6. A composition according to any one of claims 1 to 5, **characterized in that** the potato starch is present in a derivatized form.

7. A composition according to claim 6, **characterized in that** the potato starch carries ester and/or ether groups.

8. A composition according to claim 7, **characterized in that** the potato starch is present as a methyl, ethyl, hydroxyethyl, hydroxypropyl, hydroxybutyl, carboxymethyl, cyanoethyl, carbamoyl ether or a mixture thereof.

9. A composition according to any one of claims 1 to 8, **characterized in that** it comprises, in addition to amylopectin potato starch, native or derivatized starches from other vegetable sources, cellulose and/or cellulose derivatives and/or other hydrocolloids or derivatives thereof.

10. A composition according to any one of claims 1 to 9, **characterized in that** it additionally comprises fillers, dyes and other additives usual in such masses, which are known per se.

11. The use of a composition according to any one of claims 1 to 10 as a ready-to-use rendering mass.

12. The use of optionally derivatized amylopectin potato starch obtained from potatoes modified by molecular biological methods, as a thickening agent, water retention improver or processing aid, respectively, in combination with hydraulic and/or organopolymer binders and/or mixtures thereof.

## Revendications

1. Composition comprenant un liant hydraulique ou polymère organique ou des mélanges de ceux-ci dans des systèmes aqueux et de l'amidon de pomme de terre natif ou dérivé avec une quantité d'amylose inférieure à 20 %, **caractérisée en ce que** l'amidon de pomme de terre en est un qui est obtenu à partir de pommes de terre modifiées par des méthodes biologiques moléculaires.

2. Composition selon la revendication 1, **caractérisée en ce que** l'amidon de pomme de terre présente une quantité d'amylose de 0 % à 8 %.

3. Composition selon la revendication 1 ou 2, **caractérisée en ce que** l'amidon de pomme de terre présente une quantité d'amylose de 0 % à 5%.

4. Composition selon la revendication 3, **caractérisé en ce que** l'amidon de pomme de terre en est un qui est obtenu à partir de pommes de terre modifiées génétiquement par inhibition antisens d'un gène GBSS.

5. Composition selon l'une des revendications 1 à 4, **caractérisée en ce que** l'amidon de pomme de terre est sous forme gonflant à froid ou soluble à froid.

6. Composition selon l'une des revendications 1 à 5, **caractérisée en ce que** l'amidon de pomme de terre est sous forme dérivée.

7. Composition selon la revendication 6, **caractérisée en ce que** l'amidon de pomme de terre porte des groupes esters et/ou éthers.

8. Composition selon la revendication 7, **caractérisée en ce que** l'amidon de pomme de terre présente un éther de méthyle, éthyle, hydroxyéthyle, hydroxypropyle, hydroxybutyle, carboxyméthyle, cyanoéthyle, carbamoyle ou leur mélange.

9. Composition selon l'une des revendications 1 à 8, **caractérisée en ce qu'**elle contient en plus de l'amidon de pomme de terre-amylopectine, d'autres amidons natifs ou dérivés de sources végétales, de la cellulose et/ou des dérivés de cellulose et/ou d'autres hydrocolloïdes ou leurs dérivés.

10. Composition selon l'une des revendications 1 à 9, **caractérisée en ce qu'**elle comprend en outre des charges, des colorants, connus en soi et d'autres additifs habituels dans de telles masses.

11. Utilisation d'une composition selon l'une des revendications 1 à 10 comme enduit fini.

12. Utilisation d'amidon de pomme de terre natif-amylopectine éventuellement dérivé, qui est obtenu par des pommes de terre modifiées par des méthodes biologiques moléculaires, comme agent épaississant, agent amélioration la rétention d'eau ou agent d'aide à la transformation avec des liants hydrauliques ou polymères organiques ou leurs mélanges.
